# EUROPEAN PATENT APPLICATION

(11) **EP 4 657 627 A1**
(43) Date of publication of application: **03.12.2025**
(21) Application number: 25167631.8
(22) Date of filing: 01.04.2025
(51) Int. Cl.: H01M 50/209, H01M 50/249, B60L 50/64, B60K 1/04, H01M 50/271, H01M 50/342, H01M 50/367, H01M 50/358, B60K 1/00

(54) **POWER STORAGE DEVICE**

(30) Priority: 15.05.2024 JP 2024079638
(71) Applicant: TOYOTA JIDOSHA KABUSHIKI KAISHA, Toyota-shi, Aichi-ken, 471-8571 (JP)
(72) Inventor: INOUE, Shigeyuki, Toyota-shi, Aichi-ken, 471-8571 (JP); SUGIE, Kazuki, Toyota-shi, Aichi-ken, 471-8571 (JP); KUMAZAWA, Kazuya, Toyota-shi, Aichi-ken, 471-8571 (JP)
(74) Representative: TBK

(57) **Abstract**

A power storage device (100) includes a plurality of power storage cells (10), a lower case (31), a share panel (33) having an exhaust port (33b), and a cover member (40). The share panel (33) forms a sealed smoke exhaust space (S1) between a bottom plate (31c) of the lower case (31) and the share panel (33). The share panel (33) has a standing wall (33d) standing upward from around the exhaust port (33b). The cover member (40) includes a peripheral wall portion (41) surrounding the standing wall (33d) and a covering portion (42) covering the exhaust port (33b) from above.

## Description

### CROSS REFERENCE TO RELATED APPLICATIONS

This nonprovisional application is based on Japanese Patent Application No. 2024-079638 filed on May 15, 2024 with the Japan Patent Office, the entire contents of which are hereby incorporated by reference.

### BACKGROUND

### Field

The present disclosure relates to a power storage device.

### Description of the Background Art

Japanese National Patent Publication No. 2022-525014 discloses a power battery pack mounted in a battery electric vehicle. The power battery pack includes a plurality of cells. Each of the plurality of cells is provided with an explosion-proof valve for discharging the smoke or gas inside the cell.

### SUMMARY

Although not described in Japanese National Patent Publication No. 2022-525014 above, the smoke or gas may be discharged from the lower surface of the cell (power storage cell) by the explosion-proof valve (safety valve) provided on the lower surface of the cell. In this configuration, a smoke exhaust space (smoke exhaust path) is formed below the cell. In this case, it is conceivable that gas will be discharged out of the smoke exhaust space through the exhaust hole, but a blast discharged from the power storage cell may be discharged through the exhaust hole.

The present disclosure has been made to solve the problem described above. An object of the present disclosure is to provide a power storage device that can suppress discharge of a blast from an exhaust port while discharging gas in a smoke exhaust space from the exhaust port.

A power storage device according to an aspect of the present disclosure includes at least one power storage cell including a lower surface on which a safety valve is provided, a housing that accommodates the at least one power storage cell and includes a lower case and a share panel, and a cover member disposed on the share panel. The lower case includes a bottom portion covering the at least one power storage cell from below and having a through hole positioned to overlap the safety valve. The share panel is disposed below the lower case and forms a smoke exhaust space between the bottom portion of the lower case and the share panel. The smoke exhaust space is sealed with a sealing portion. The share panel includes a panel body covering the bottom portion of the lower case from below and having an exhaust port, and a standing wall standing upward from a portion of the panel body, the portion surrounding the exhaust port. The cover member includes an outer wall portion facing the standing wall opposite to the exhaust port relative to the standing wall, and a covering portion connected to the outer wall portion and covering the exhaust port from above.

In the power storage device according to the aspect of the present disclosure, the outer wall portion facing the standing wall opposite to the exhaust port relative to the standing wall and the covering portion covering the exhaust port from above are provided as described above. This allows a blast emitted from the power storage cell to be shielded from the exhaust port by a double structure of the standing wall and the outer wall portion. Further, a blast from above can be shielded from the exhaust port by the covering portion. As a result, discharge of the blast from the exhaust port can be suppressed effectively. This can suppress discharge of the blast from the exhaust port while discharging the gas in the smoke exhaust space from the exhaust port.

The standing wall may have an opening. With such a configuration, the moisture in the smoke exhaust space can be discharged from the exhaust port to the outside through the opening of the standing wall. The gas in the smoke exhaust space can be discharged from the exhaust port to the outside through the opening of the standing wall.

The power storage device may include at least one side wall disposed between the standing wall and the outer wall portion and facing the opening. With such a configuration, discharge of a blast from the exhaust port to the outside through the opening of the standing wall can be suppressed by the at least one side wall. In addition, intrusion of the moisture that has entered from the exhaust port through the opening of the standing wall into the smoke exhaust space can be suppressed by the at least one side wall.

An upper portion of the at least one side wall may be connected with a projection projecting opposite to the opening. With such a configuration, a blast that has scattered up to the at least one side wall can be covered from above by the projection, thus suppressing discharge of the blast from the exhaust port to the outside beyond the side wall.

The at least one side wall may include a first side wall and a second side wall that sandwich the exhaust port in between in a first direction, and a third side wall and a fourth side wall that sandwich the exhaust port in between in a second direction intersecting the first direction. With such a configuration, the exhaust port can be surrounded by the first to fourth side walls, thus more suppressing discharge of a blast from the exhaust port to the outside.

Each of the first side wall and the second side wall may be connected with the third side wall and the fourth side wall. With such a configuration, the positional relationship among the first to fourth side walls can be made constant more easily than when the first to fourth side walls are independent of one another. In addition, the number of components can be reduced more and the configuration of the power storage device can be simplified more than when the first to fourth side walls are independent of one another.

The standing wall may surround the exhaust port. With such a configuration, discharge of a blast from the exhaust port can be suppressed more than when the standing wall is disposed on only one side relative to the exhaust port.

The outer wall portion may surround the standing wall. With such a configuration, discharge of a blast from the exhaust port can be suppressed more than when the outer wall portion faces only part of the standing wall.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 schematically shows a vehicle including a power storage device according to an embodiment.
Fig. 2 is a perspective view of the power storage device and a vehicle body according to the embodiment.
Fig. 3 is a sectional view taken along the line III-III in Fig. 2.
Fig. 4 is a perspective view showing a configuration of a power storage cell.
Fig. 5 is a perspective view showing a configuration of a lower case of the power storage device.
Fig. 6 is a perspective view showing a configuration of the lower case with a bracket unit attached thereto.
Fig. 7 is an exploded perspective view showing configurations of the lower case and a cooler.
Fig. 8 is an exploded perspective view showing configurations of the lower case and an inner path defining portion.
Fig. 9 is a sectional view taken along the line IX-IX in Fig. 10.
Fig. 10 is a plan view of the lower case seen from below.
Fig. 11 is an exploded perspective view of a standing wall in the vicinity of an exhaust port and a cover member.
Fig. 12 is a perspective view of the cover member disposed on a share panel.
Fig. 13 is a sectional view taken along the line XIII-XIII in Fig. 11.
Fig. 14 is a sectional view taken along the line XIV-XIV in Fig. 11.
Fig. 15 is a sectional view taken along the line XV-XV in Fig. 11.
Fig. 16 is a partially enlarged view of a smoke exhaust hole and its vicinity in Fig. 9.
Fig. 17 is a partially enlarged view of a side bracket and its vicinity in Fig. 9.
Fig. 18 is a sectional view of a cover member and a standing wall according to a modification of the embodiment.

### DESCRIPTION OF THE PREFERRED EMBODIMENTS

An embodiment of the present disclosure will be described with reference to the drawings. In the drawings referred to below, the same or corresponding components have the same reference characters allotted.

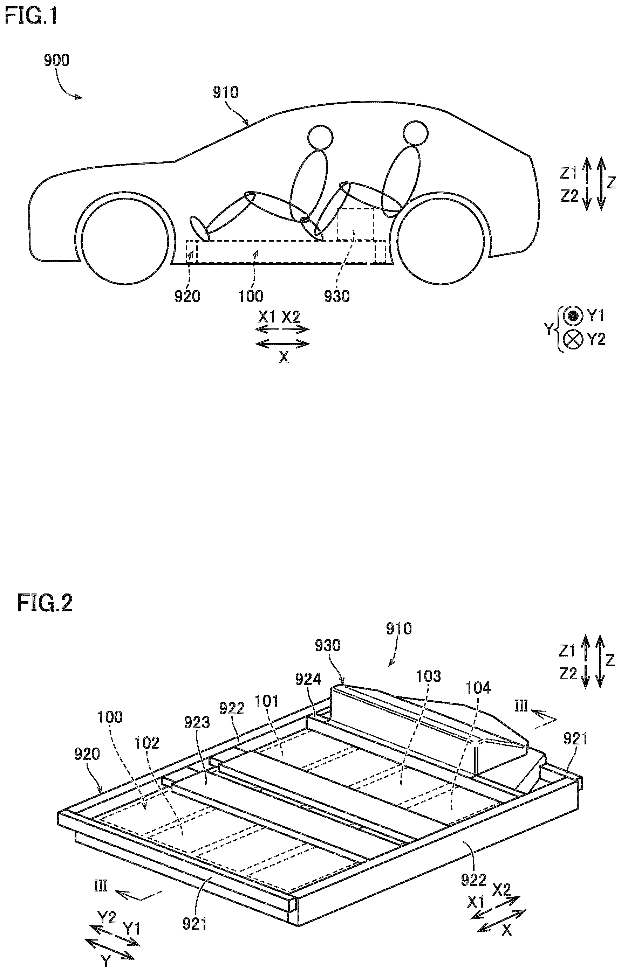

A power storage device 100 in an embodiment of the present disclosure will be described with reference to Figs. 1 to 17. Fig. 1 is a schematic side view of a vehicle 900 including power storage device 100 according to the present embodiment. In this specification, an X direction, a Y direction, and a Z direction are orthogonal to one another. For example, the X direction and the Y direction are the front-rear direction and the vehicle width direction of vehicle 900, respectively, when power storage device 100 is mounted in vehicle 900. An X1 direction and an X2 direction are the vehicle front side and the vehicle rear side, respectively. A Y1 direction and a Y2 direction are the vehicle left side and the vehicle right side, respectively. The Z direction is the up-down (vertical) direction. The X direction and the Y direction are examples of the "first direction" and the "second direction", respectively, in the present disclosure.

As shown in Fig. 1, vehicle 900 includes a vehicle body 910 and a device unit 930, in addition to power storage device 100. Examples of vehicle 900 include a hybrid electric vehicle, a plug-in hybrid electric vehicle, and a battery electric vehicle. Vehicle body 910 includes a frame member 920. Frame member 920 is disposed at the bottom of vehicle body 910.

As shown in Fig. 2, frame member 920 includes a pair of first frames 921, a pair of second frames 922, a first cross frame 923, and a second cross frame 924.

The pair of first frames 921 face each other in the X direction. Each first frame 921 is shaped to extend along the Y direction.

The pair of second frames 922 face each other in the Y direction. Each second frame 922 is shaped to extend along the X direction. The ends of each second frame 922 in the X direction are connected to first frames 921. The pair of second frames 922 are shaped into an approximately square prism that surrounds power storage device 100 together with the pair of first frames 921.

First cross frame 923 is disposed between the pair of first frames 921 and connects the pair of second frames 922 to each other.

Second cross frame 924 is disposed between the pair of first frames 921 and connects the pair of second frames 922 to each other. Second cross frame 924 is spaced apart from first cross frame 923 in the X direction. Each of first cross frame 923 and second cross frame 924 forms, for example, a seat cross.

Power storage device 100 is attached to frame member 920. Power storage device 100 is disposed below first cross frame 923 and second cross frame 924. Power storage device 100 includes four power storage stacks 101 to 104. The number of power storage stacks is not limited to four.

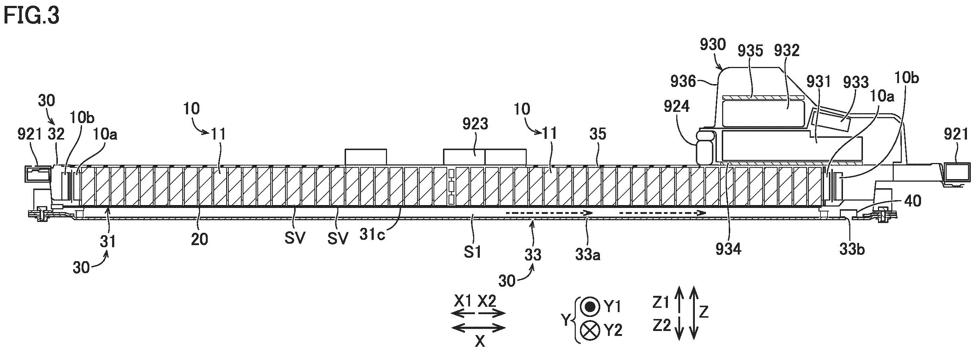

In the present embodiment, each of power storage stacks 101 to 104 is shaped into a rectangular parallelepiped elongated in the X direction. As shown in Fig. 2, the four power storage stacks 101 to 104 are disposed side by side along the Y direction. In Fig. 3, the direction of gas which may be discharged from a safety valve SV (which will be described later) is indicated by the alternate long and short dash line arrows.

Fig. 3 is a sectional view taken along the line III-III in Fig. 2. As shown in Fig. 3, power storage device 100 includes a power storage cell 10, a cooler 20, a housing 30, and a reinforcing member 35. At least one power storage cell 10 is included in each of power storage stacks 101 to 104 (Fig. 2). In the present embodiment, in each of power storage stacks 101 to 104, a plurality of (e.g., 50) power storage cells 10 are arranged in the X direction.

Each power storage cell 10 includes an electrode body 11. Electrode body 11 may be formed of a wound body of a positive electrode sheet and a negative electrode sheet wound with a separator in between, or may be formed of a stack of a positive electrode sheet and a negative electrode sheet stacked with a separator in between. Electrode body 11 is shaped to be long in the Y direction.

Cooler 20 cools power storage cells 10. In the present embodiment, cooler 20 cools each of power storage stacks 101 to 104 (Fig. 2). A cooling medium (e.g., oil) flows through cooler 20.

Housing 30 includes a lower case 31, an upper cover 32, and a share panel 33.

Upper cover 32 accommodates power storage cells 10, together with lower case 31. In the present embodiment, upper cover 32 accommodates four power storage stacks 101 to 104 (Fig. 2) in a hermetically sealed manner, together with lower case 31. Upper cover 32 covers each of power storage stacks 101 to 104 from above. Lower case 31 covers each of power storage stacks 101 to 104 from below. The peripheral edge of upper cover 32 is connected to the peripheral edge of lower case 31 with bolts or the like with a sealing member in between.

Share panel 33 is provided below lower case 31. Share panel 33 has the function of protecting lower case 31. Share panel 33 may be shaped into a flat plate.

Lower case 31 includes a bottom plate 31c. Bottom plate 31c covers power storage cells 10 from below. Bottom plate 31c and share panel 33 are located below power storage cells 10. In addition, a smoke exhaust space S1 is formed between bottom plate 31c and share panel 33. Smoke exhaust space S1 forms a smoke exhaust path through which gas and smoke (hereinafter simply referred to as "gas") discharged from power storage cell 10 flow. Bottom plate 31c is an example of the "bottom portion" in the present disclosure.

Share panel 33 includes a panel body 33a. Panel body 33a covers bottom plate 31c of lower case 31 from below. An exhaust port 33b is formed in panel body 33a. The gas in smoke exhaust space S1 is discharged from exhaust port 33b to the outside. Exhaust port 33b is formed in the vicinity of the X2-side end of smoke exhaust space S1.

Power storage device 100 includes a cover member 40. Cover member 40 is disposed on share panel 33. Cover member 40 covers exhaust port 33b from above. Cover member 40 is made of, for example, mica obtained by solidifying a natural inorganic mineral through heat pressing. Cover member 40 will be described later in detail.

On the opposite sides of power storage cells 10 in the X direction, a pair of end plates 10a are provided that sandwich power storage cells 10 from the opposite sides in the X direction. A monitoring unit (smart battery management) 10b is disposed outside each end plate 10a in the X direction.

Device unit 930 is located at, for example, an end in the X direction. In the present embodiment, device unit 930 is disposed in the rear of upper cover 32 in the front-rear direction of vehicle 900. Device unit 930 has a junction box 931, an electricity supply unit 932, an electronic control unit 933, a first cooler 934, a second cooler 935, and a device cover 936.

Junction box 931 is disposed above upper cover 32. Junction box 931 accommodates a relay, a fuse, and the like. Junction box 931 is cooled by first cooler 934 disposed between junction box 931 and upper cover 32.

Electricity supply unit 932 is disposed above junction box 931. Electricity supply unit 932 is cooled by second cooler 935 disposed on electricity supply unit 932. Electronic control unit 933 is disposed above junction box 931.

Device cover 936 accommodates junction box 931, electricity supply unit 932, electronic control unit 933, and second cooler 935.

Reinforcing member 35 is disposed on upper cover 32. Reinforcing member 35 has the function of distributing a load exerted on power storage device 100 locally from above by an occupant of vehicle 900.

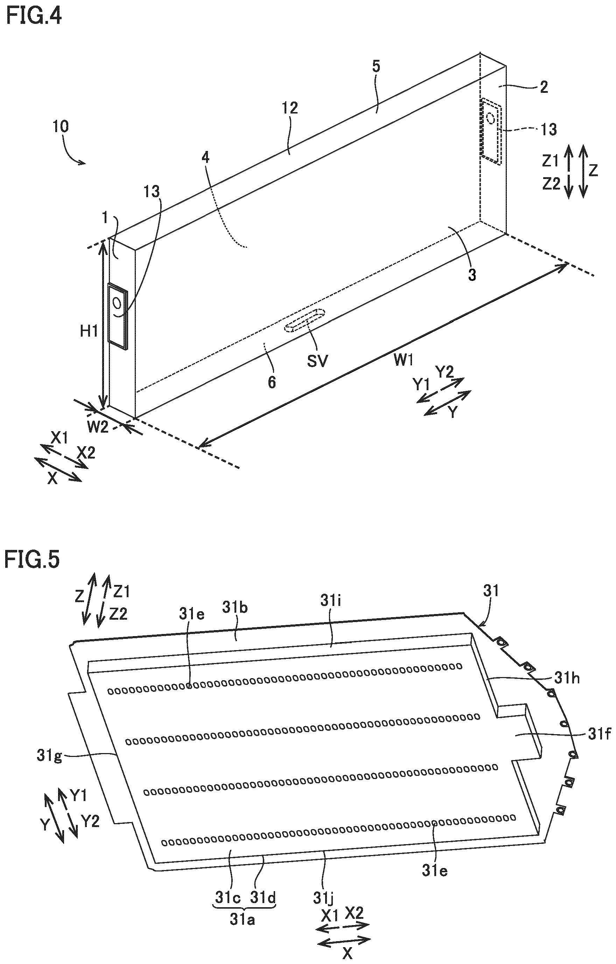

Fig. 4 is a perspective view showing a configuration of power storage cell 10. As shown in Fig. 4, each power storage cell 10 has a cell case 12, a pair of external terminals 13, and safety valve SV. Cell case 12 accommodates electrode body 11 (Fig. 3).

Cell case 12 is shaped into a rectangular parallelepiped. Cell case 12 is made of a metal such as aluminum. Power storage cell 10 is formed to be elongated in the Y direction. Specifically, a width W1 of power storage cell 10 in the Y direction is greater than a width W2 of power storage cell 10 in the X direction. A height H of power storage cell 10 is smaller than width W1 and greater than width W2.

Power storage cell 10 (cell case 12) has a short side surface 1, a short side surface 2, a long side surface 3, a long side surface 4, an upper surface 5, and a lower surface 6.

Short side surface 1 and short side surface 2 are arranged in the Y direction. Specifically, short side surface 1 and short side surface 2 are one end face and the other end face, respectively, of power storage cell 10 in the Y direction.

Long side surface 3 and long side surface 4 are arranged in the X direction. Specifically, long side surface 3 and long side surface 4 are one end face and the other end face, respectively, of power storage cell 10 in the X direction.

Upper surface 5 and lower surface 6 are arranged in the Z direction. Specifically, upper surface 5 and lower surface 6 are a Z1-side end face and a Z2-side end face, respectively, of power storage cell 10.

The pair of external terminals 13 are respectively provided on short side surface 1 and short side surface 2. Safety valve SV is provided on lower surface 6. Safety valve SV opens when the pressure of the smoke or gas inside cell case 12 becomes more than or equal to a certain level. In other words, lower surface 6, on which safety valve SV is provided, forms a pressure release surface of cell case 12.

Fig. 5 is a perspective view showing a configuration of lower case 31. Lower case 31 includes an accommodation portion 31a and a plate portion 31b. Accommodation portion 31a includes bottom plate 31c and a peripheral wall 31d. Bottom plate 31c is shaped into a plate, and bottom plate 31c has a plurality of smoke exhaust holes 31e. Smoke exhaust holes 31e are arranged in the front-rear direction (X direction) of vehicle 900. In addition, a plurality of (in Fig. 5, four) rows of smoke exhaust holes 31e, which are arranged in the X direction, are arranged in the Y direction. Smoke exhaust hole 31e is an example of the "through hole" in the present disclosure.

Alternatively, instead of smoke exhaust holes 31e arranged in the X direction, an opening formed to be elongated in the X direction may be formed. In the opening as described above, with lower case 31 being fixed to upper cover 32, safety valve SV of each of power storage cells 10 is in communication with the opening. Configuring such an opening can facilitate alignment of the opening with safety valve SV.

Accommodation portion 31a includes a projection 31f that projects toward the X2 side. Projection 31f is provided at the X2-side end of accommodation portion 31a. Projection 31f is also provided at the center of accommodation portion 31a in the Y direction. No power storage cell 10 is disposed above projection 31f.

Peripheral wall 31d extends upward from the outer peripheral edge of bottom plate 31c. Peripheral wall 31d is formed in an annular shape. Peripheral wall 31d includes a front wall 31g disposed on the front side (X1 side), a rear wall 31h disposed on the rear side (X2 side), a left wall 31i disposed on the left side (Y1 side), and a right wall 31j disposed on the right side (Y2 side). Accommodation portion 31a has an opening that opens upward. Plate portion 31b protrudes horizontally from the opening edge of accommodation portion 31a. Rear wall 31h includes the side wall of projection 31f and the side wall of the portion of accommodation portion 31a which is adjacent to projection 31f in the Y direction.

Herein, power storage cells 10 are disposed in accommodation portion 31a. Safety valve SV (Fig. 4) of power storage cell 10 and smoke exhaust hole 31e are arranged in the Z direction, and safety valve SV is in communication with smoke exhaust hole 31e. No power storage cell 10 may be provided in projection 31f.

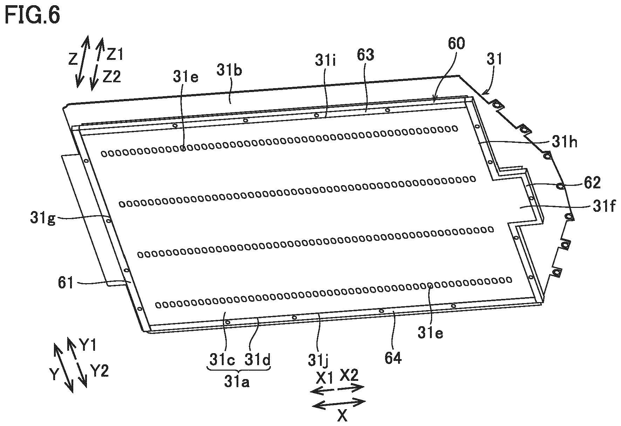

As shown in Fig. 6, power storage device 100 includes a bracket unit 60 provided on the outer peripheral surface of accommodation portion 31a. Bracket unit 60 is provided on the outer surface of peripheral wall 31d of lower case 31. Bracket unit 60 includes a front bracket 61, a rear bracket 62, a side bracket 63, and a side bracket 64.

Front bracket 61 is fixed to the outer surface of front wall 31g of lower case 31. Rear bracket 62 is provided on the outer surface of rear wall 31h. Side bracket 63 is provided on the outer surface of left wall 31i. Side bracket 64 is provided on the outer surface of right wall 31j. Bracket unit 60 is formed in an approximately annular shape. Rear bracket 62 may be formed of a single bracket, or may be formed of, for example, a plurality of linear brackets.

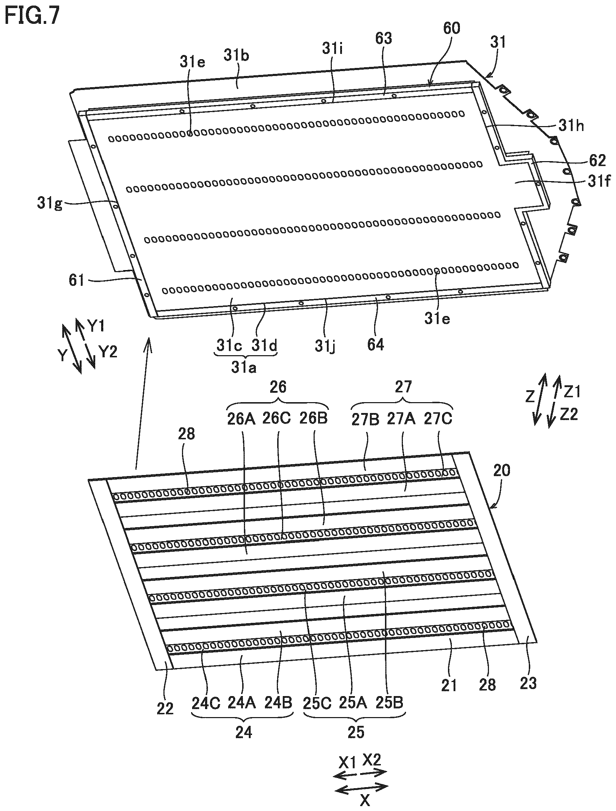

Fig. 7 is a perspective view of lower case 31, bracket unit 60, and cooler 20. Cooler 20 includes a cooling portion 21, a connection portion 22, and a connection portion 23.

Cooling portion 21 extends in the X direction. Connection portion 22 is provided at the front end (X1-side end) of cooling portion 21, and connection portion 23 is provided at the rear end (X2-side end) of cooling portion 21.

Connection portion 22 is connected with a supply pipe (not shown) and a discharge pipe (not shown). A cooling liquid is supplied from the supply pipe. The cooling liquid flows through cooling portion 21 and connection portion 22 and returns to connection portion 22. The cooling liquid that has returned to connection portion 22 is discharged from the exhaust pipe.

Power storage stacks 101 to 104 (Fig. 2) are disposed above cooling portion 21 with bottom plate 31c of lower case 31 in between. Cooling portion 21 includes a first cooling portion 24, a second cooling portion 25, a third cooling portion 26, and a fourth cooling portion 27. First cooling portion 24, second cooling portion 25, third cooling portion 26, and fourth cooling portion 27 are arranged in the stated order from the Y2 side (in the Y direction).

First cooling portion 24 has a flow portion 24A, a flow portion 24B, and a connecting plate 24C. Second cooling portion 25 has a flow portion 25A, a flow portion 25B, and a connecting plate 25C. Third cooling portion 26 has a flow portion 26A, a flow portion 26B, and a connecting plate 26C. Fourth cooling portion 27 has a flow portion 27A, a flow portion 27B, and a connecting plate 27C. First cooling portion 24, second cooling portion 25, third cooling portion 26, and fourth cooling portion 27 have the same configuration, and thus, only first cooling portion 24 will be described in detail as a representative example.

Flow portion 24A and flow portion 24B are spaced apart from each other in the Y direction. Each of flow portion 24A and flow portion 24B extends in the X direction.

Connecting plate 24C is disposed between flow portion 24A and flow portion 24B and connects flow portion 24A to flow portion 24B.

Connecting plate 24C has a plurality of holes 28. Holes 28 are spaced apart from each other in the X direction.

Holes 28 correspond respectively to smoke exhaust holes 31e formed in bottom plate 31c. With cooler 20 being fixed to lower case 31, holes 28 and smoke exhaust holes 31e are arranged in the Z direction.

Instead of holes 28 arranged in the X direction, an opening formed to be elongated in the X direction may be formed. In the opening as described above, with cooler 20 being fixed to lower case 31, smoke exhaust holes 31e formed in lower case 31 are in communication with the opening. Configuring such an opening can facilitate alignment of the opening with smoke exhaust holes 31e.

Cooler 20 is fixed to bottom plate 31c of lower case 31. Specifically, cooler 20 is fixed to bottom plate 31c with a thermally conductive adhesive (not shown in Fig. 7).

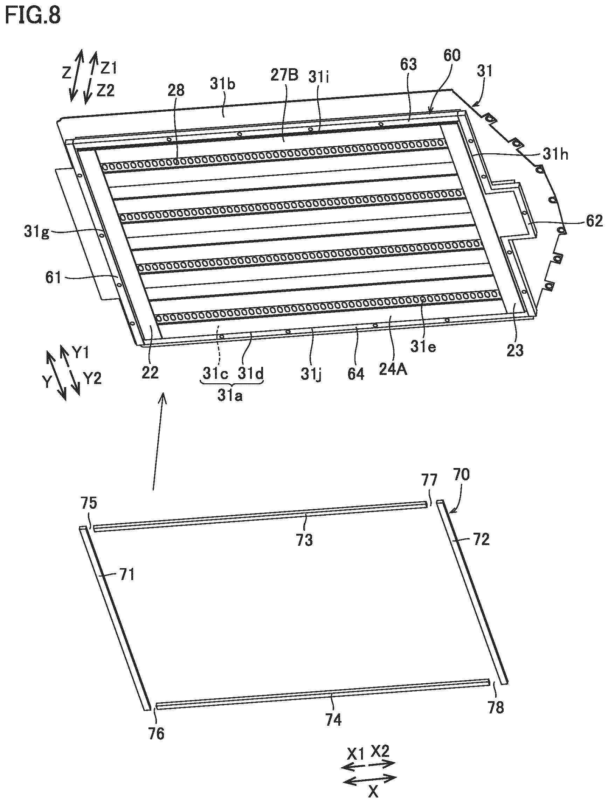

As shown in Fig. 8, power storage device 100 includes an inner path defining portion 70. Inner path defining portion 70 is disposed on the lower surface of cooler 20.

Inner path defining portion 70 is disposed in smoke exhaust space S1 (Fig. 3) between share panel 33 and bottom plate 31c of lower case 31, and is formed in an annular shape.

Inner path defining portion 70 includes a front side portion 71, a rear side portion 72, a left side portion 73, and a right side portion 74. Front side portion 71 and rear side portion 72 are spaced apart from each other in the X direction. Each of front side portion 71 and rear side portion 72 extends in the Y direction. Left side portion 73 and right side portion 74 are spaced apart from each other in the Y direction. Each of left side portion 73 and right side portion 74 extends in the X direction.

An opened portion 75 is formed between front side portion 71 and left side portion 73. An opened portion 76 is formed between front side portion 71 and right side portion 74. An opened portion 77 is formed between rear side portion 72 and left side portion 73. An opened portion 78 is formed between rear side portion 72 and right side portion 74.

Front side portion 71 is located on the front side (X1 side) of inner path defining portion 70. Front side portion 71 is disposed on the lower surface of connection portion 22 of cooler 20.

Rear side portion 72 is located on the rear side (X2 side) of inner path defining portion 70. Rear side portion 72 is disposed on the lower surface of connection portion 23 of cooler 20. An opening may be formed in, for example, the central portion of rear side portion 72 in the Y direction.

Left side portion 73 is disposed between the left end (Y1-side end) of front side portion 71 and the left end (Y2-side end) of rear side portion 72. Left side portion 73 is disposed in flow portion 27B.

Right side portion 74 is disposed between the right end (Y2-side end) of front side portion 71 and the right end (Y2-side end) of rear side portion 72. Right side portion 74 is disposed in flow portion 24A.

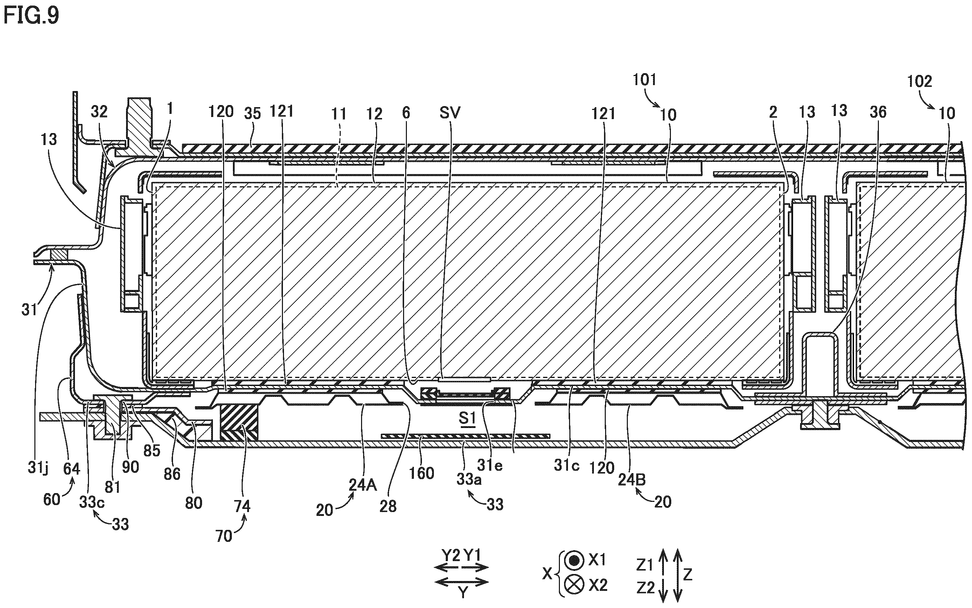

Fig. 9 is a sectional view of power storage cell 10 and the like which is taken along the Y direction. As shown in Fig. 9, power storage device 100 includes a blast collection portion 80. Blast collection portion 80 is disposed between bottom plate 31c of lower case 31 and share panel 33. Blast collection portion 80 is fixed to bracket unit 60 (side bracket 64 in Fig. 9). Blast collection portion 80 is disposed adjacent to inner path defining portion 70 (right side portion 74 in Fig. 9).

Share panel 33 includes a flange 33c formed on the outer peripheral edge of panel body 33a, in addition to panel body 33a. Panel body 33a is recessed downward relative to flange 33c. Flange 33c extends horizontally from the edge of panel body 33a.

Blast collection portion 80 is fixed to bracket unit 60 with a bolt 81 together with flange 33c of share panel 33. An outer path defining portion 90 is formed by blast collection portion 80 contacting bracket unit 60. Outer path defining portion 90 is located outside inner path defining portion 70. Outer path defining portion 90 is a seal portion formed by fastening of blast collection portion 80 to bracket unit 60.

Power storage device 100 includes a cross member 36. Cross member 36 is connected to a portion of bottom plate 31c of lower case 31 which is located between a pair of power storage stacks (between power storage stack 101 and power storage stack 102 in Fig. 9) adjacent to each other. Cross member 36 extends along the X direction. Cross member 36 is connected to peripheral wall 31d (Fig. 5). Cross member 36 may be connected to a pair of first frames 921 (Fig. 2) with a bracket (not shown) in between.

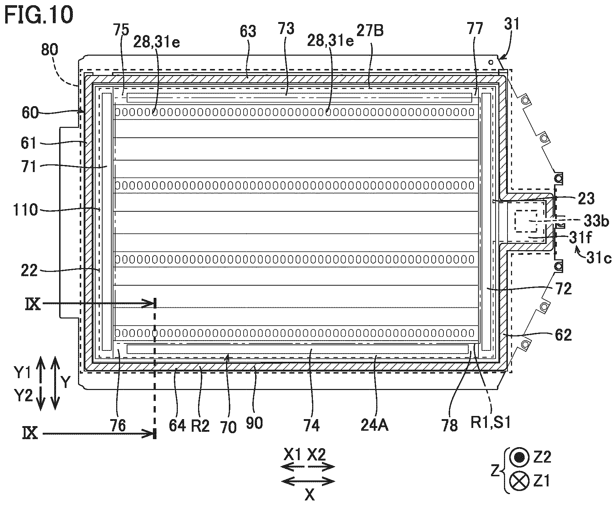

Fig. 10 is a bottom view showing cooler 20, bracket unit 60, and inner path defining portion 70. In Fig. 10, blast collection portion 80 is indicated by the broken line. As shown in Fig. 10, blast collection portion 80 has an annular shape extending along bracket unit 60.

In Fig. 10, a region R1 indicates the region of bottom plate 31c of lower case 31 in which smoke exhaust holes 31e (holes 28) are formed.

With share panel 33 being attached to lower case 31, smoke exhaust space S1, which is surrounded by inner path defining portion 70, is formed between share panel 33 and lower case 31. As shown in Fig. 10, when lower case 31 and the like are viewed from below in plan view, region R1 and smoke exhaust space S1 overlap each other.

A contact region R2 indicates the region where blast collection portion 80 and bracket unit 60 come into contact with each other. In Fig. 10, contact region R2 is hatched for easy viewing. Contact region R2 is located outside inner path defining portion 70. Contact region R2 surrounds inner path defining portion 70.

In contact region R2, outer path defining portion 90 is formed. In other words, outer path defining portion 90 is located outside inner path defining portion 70 and surrounds inner path defining portion 70. This can prevent gas or the like from power storage cell 10 from leaking out of power storage device 100. In other words, outer path defining portion 90 is an example of the "sealing portion" in the present disclosure.

An exhaust passage 110 is formed between inner path defining portion 70 and outer path defining portion 90 configured as described above. Exhaust passage 110 has an annular shape extending along inner path defining portion 70 and outer path defining portion 90.

Exhaust passage 110 is in communication with smoke exhaust space S1 through opened portions 75, 76, 77, 78. Exhaust passage 110 is in communication with the outside through exhaust port 33b. In Fig. 10, the position at which exhaust port 33b is provided is indicated by the alternate long and short dash line. As shown in Fig. 10, exhaust port 33b is provided below projection 31f of lower case 31. In other words, exhaust port 33b is provided between inner path defining portion 70 and outer path defining portion 90.

In a conventional power storage device, when gas is discharged out of the smoke exhaust space through an exhaust port, there is a risk that a blast emitted from the power storage cell will be discharged from the exhaust port.

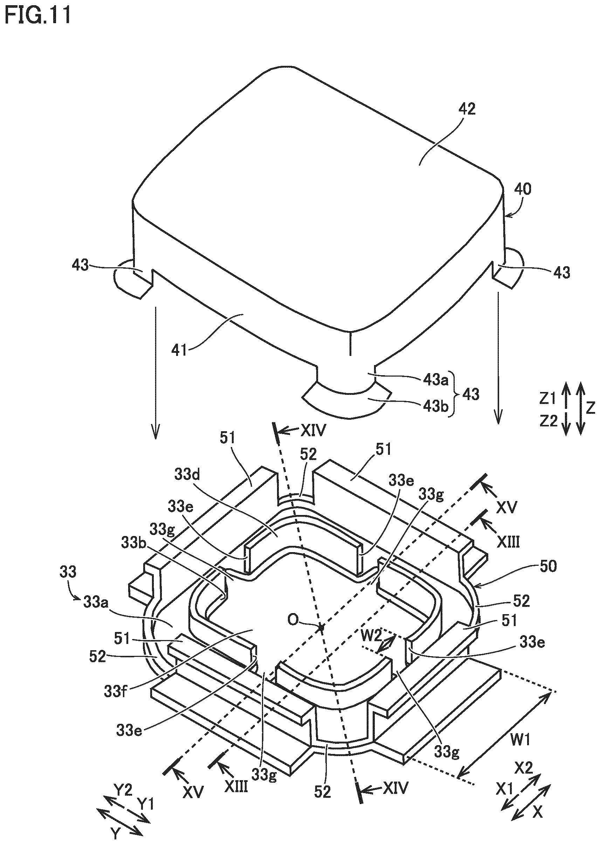

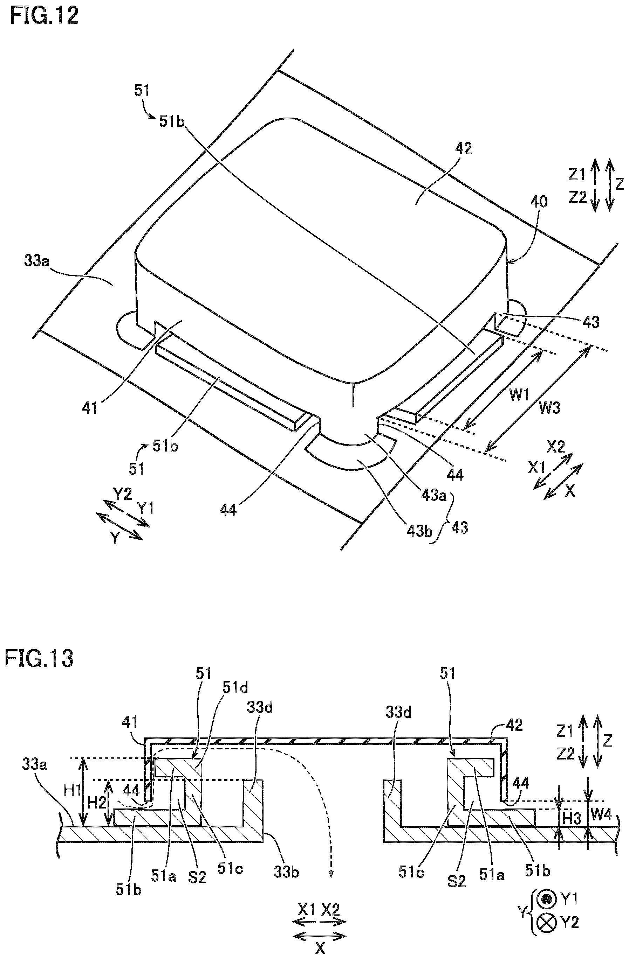

In the present embodiment, thus, the exhaust structure shown in Figs. 11 and 12 is provided around exhaust port 33b. Fig. 11 is an exploded perspective view of cover member 40 and share panel 33. Fig. 12 is a perspective view of cover member 40 disposed on share panel 33.

Specifically, as shown in Fig. 11, share panel 33 has a standing wall 33d. Standing wall 33d stands upward from the portion around exhaust port 33b. Standing wall 33d surrounds exhaust port 33b. Standing wall 33d is integrally (contiguously) formed with panel body 33a. Standing wall 33d is formed by part of panel body 33a being raised.

Cover member 40 includes a peripheral wall portion 41 and a covering portion 42. Peripheral wall portion 41 faces standing wall 33d at a position (outside) opposite to exhaust port 33b relative to standing wall 33d. In other words, peripheral wall portion 41 surrounds (encloses) exhaust port 33b and standing wall 33d from outside. Peripheral wall portion 41 is an example of the "outer wall portion" in the present disclosure.

Covering portion 42 is connected to peripheral wall portion 41 and covers exhaust port 33b from above. Covering portion 42 is connected to the upper end of peripheral wall portion 41.

As a result, exhaust port 33b can be surrounded by a double shielding structure of standing wall 33d and peripheral wall portion 41 and by covering portion 42, thus effectively suppressing discharge of a blast, emitted from power storage cell 10, from exhaust port 33b.

Standing wall 33d has a plurality of (in the present embodiment, four) openings 33e. Opening 33e is shaped into a slit extending in the up-down direction. Opening 33e is formed on each of the X1 side, the X2 side, the Y1 side, and the Y2 side relative to a center O of exhaust port 33b. This allows gas and moisture to be discharged from exhaust port 33b through openings 33e.

Exhaust port 33b includes a central hole 33f and a plurality of (in the present embodiment, four) projecting holes 33g. Central hole 33f is formed contiguously with projecting holes 33g. Projecting holes 33g project outward respectively from positions corresponding to different openings 33e. Each of projecting holes 33g projects outward from central hole 33f. Central hole 33f is formed inside standing wall 33d. The formation of projecting holes 33g makes it possible to discharge gas more efficiently to the outside.

Cover member 40 includes four leg portions 43. Each of the four leg portions 43 is connected to the lower end of peripheral wall portion 41. The four leg portions 43 are provided respectively at four corners of the lower end of cover member 40 that has a rectangular parallelepiped shape.

Leg portion 43 has a vertical portion 43a and a horizontal portion 43b. Vertical portion 43a extends downward from the lower end of peripheral wall portion 41. Horizontal portion 43b extends horizontally (outward) from the lower end of vertical portion 43a. Horizontal portion 43b is fixed (e.g., welded and fastened) to the upper surface of share panel 33 (panel body 33a). This causes cover member 40 to be fixed to panel body 33a.

Power storage device 100 includes a shielding member 50. Shielding member 50 is formed in an annular shape. Shielding member 50 surrounds standing wall 33d from outside.

Shielding member 50 includes a plurality of (in the present embodiment, four) shielding portions 51 and a plurality of (in the present embodiment, four) connection portions 52. Shielding portion 51 is disposed on each of the X1 side, the X2 side, the Y1 side, and the Y2 side relative to exhaust port 33b. In other words, exhaust port 33b is sandwiched between shielding portion 51 on the X1 side and shielding portion 51 on the X2 side. Exhaust port 33b is also sandwiched between shielding portion 51 on the Y1 side and shielding portion 51 on the Y2 side. Shielding portions 51 are positioned so as to respectively face different openings 33e.

Each of shielding portions 51 extends linearly in the circumferential direction of shielding member 50. Each of shielding portions 51 has width W1 in the circumferential direction. Width W1 is greater than width W2 of opening 33e in the circumferential direction of standing wall 33d. Opening 33e is positioned so as to face the central portion of shielding portion 51 in the circumferential direction.

Each of connection portions 52 connects shielding portions 51 adjacent to each other in the circumferential direction of shielding member 50. In other words, each of shielding portion 51 on the X1 side and shielding portion 51 on the X2 side is connected to shielding portion 51 on the Y1 side and shielding portion 51 on the Y2 side by connection portions 52. Each of connection portions 52 connects the lower ends of shielding portions 51 to each other. Leg portion 43 of cover member 40 is positioned so as to face connection portion 52 (between adjacent shielding portions 51).

As shown in Fig. 12, with cover member 40 being disposed on panel body 33a, an opening 44 is formed between peripheral wall portion 41 and panel body 33a. Opening 44 is formed by a vertical portion 43a being provided in leg portion 43. Opening 44 is formed between leg portions 43 adjacent to each other in the circumferential direction of peripheral wall portion 41. Opening 44 has a width W3 in the circumferential direction. Width W3 is greater than width W1 of shielding portion 51. A lower surface portion 51b (which will be described below) of shielding portion 51 projects from opening 44.

Fig. 13 is a sectional view taken along the line XIII-XIII in Fig. 11. As shown in Fig. 13, each of shielding portions 51 includes an upper surface portion 51a, a lower surface portion 51b, and a side surface portion 51c. Upper surface portion 51a and lower surface portion 51b are provided at the upper end and the lower end, respectively, of shielding portion 51. Side surface portion 51c connects upper surface portion 51a to lower surface portion 51b. Upper surface portion 51a and side surface portion 51c are examples of the "projection " and "side wall", respectively, in the present disclosure. In addition, side surface portions 51c of shielding portion 51 on the X1 side, shielding portion 51 on the X2 side, shielding portion 51 on the Y1 side, and shielding portion 51 on the Y2 side are examples of the "first side wall", "second side wall", "third side wall", and "fourth side wall", respectively, in the present disclosure.

Side surface portion 51c is disposed between standing wall 33d and peripheral wall portion 41. In other words, side surface portion 51c shields peripheral wall portion 41 from standing wall 33d from each other.

Upper surface portion 51a is connected to upper end 51d of side surface portion 51c. Upper surface portion 51a projects from upper end 51d of side surface portion 51c to the side opposite to exhaust port 33b. Upper end 51d is an example of the "upper portion" in the present disclosure.

Lower surface portion 51b is connected to the lower end of side surface portion 51c. Lower surface portion 51b projects from the lower end of side surface portion 51c to the side opposite to exhaust port 33b. Lower surface portion 51b is fixed (e.g., welded and fastened) to the upper surface of panel body 33a.

Thus, shielding portion 51 has a U shape projecting toward exhaust port 33b. This creates a collection space S2 in which a blast is collected in a space surrounded by upper surface portion 51a, lower surface portion 51b, and side surface portion 51c. In Fig. 13, an example of the gas flow path in discharge of gas from exhaust port 33b is indicated by the alternate long and short dash line arrow.

Shielding portion 51 has a height H1 in the up-down direction. Standing wall 33d has a height H2 in the up-down direction. Height H1 is greater than height H2. In other words, shielding portion 51 projects upward beyond standing wall 33d. This can suppress discharge of a blast from exhaust port 33b beyond shielding portion 51. Opening 44 of cover member 40 has a width W4 in the up-down direction. Width W4 is smaller than height H2 of standing wall 33d. This can suppress intrusion of a blast into cover member 40 through opening 44. Width W4 is greater than a height H3 of lower surface portion 51b.

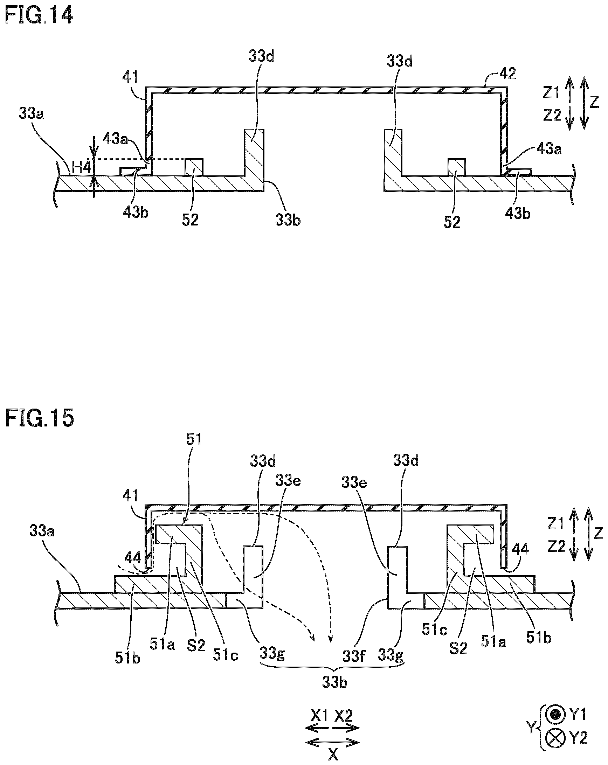

Fig. 14 is a sectional view taken along the line XIV-XIV in Fig. 11. As shown in Fig. 14, connection portion 52 has a height H4 in the up-down direction. Height H4 is smaller than height H2 (Fig. 13) of standing wall 33d. Height H4 may be equal to height H3 (Fig. 13) of lower surface portion 51b.

Fig. 15 is a sectional view taken along the line XV-XV in Fig. 11. As shown in Fig. 15, side surface portion 51c faces opening 33e of standing wall 33d. Upper surface portion 51a projects opposite to opening 33e. In Fig. 15, an example of the gas flow path in discharge of gas from exhaust port 33b is indicated by the alternate long and short dash line arrow.

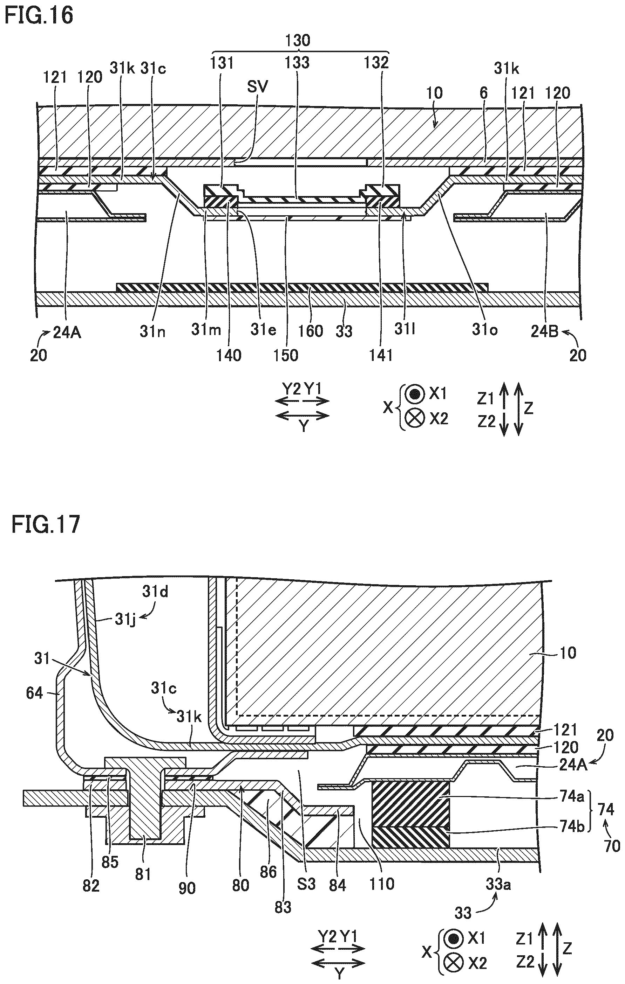

Fig. 16 is a partially enlarged sectional view of smoke exhaust hole 31e and its vicinity. Bottom plate 31c of lower case 31 includes a bottom body 31k where power storage cell 10 is disposed and a protrusion 31l. A plurality of protrusions 31l are spaced apart from each other in the Y direction. Each protrusion 311 extends in the X direction. Protrusion 31l protrudes downward from base body 31k. The lower end of protrusion 311 is located in hole 28 formed in cooler 20. Smoke exhaust hole 31e is formed at the lower end of protrusion 311.

Protrusion 31l includes a bottom plate 31m and side walls 31n, 31o. Each of side wall 31n and side wall 31o connects bottom plate 31m to bottom body 31k. Bottom plate 31m has a smoke exhaust hole 31e.

A thermally conductive adhesive material 120 is provided between bottom body 31k and cooler 20. Thermally conductive adhesive material 120 bonds bottom body 31k to cooler 20. In addition, a thermally conductive adhesive material 121 is provided between bottom body 31k and lower surface 6 of power storage cell 10. Thermally conductive adhesive material 121 bonds bottom body 31k to power storage cell 10. Each of thermally conductive adhesive materials 120 and 121 extends along the X direction.

Power storage device 100 includes a heat insulating plate 130. Heat insulating plate 130 is disposed between hole 28 of cooler 20 and safety valve SV of power storage cell 10. Specifically, heat insulating plate 130 is provided in the space between protrusion 311 and lower surface 6 of power storage cell 10, and is disposed at the lower end of protrusion 311. Heat insulating plate 130 is made of, for example, mica. Heat insulating plate 130 covers smoke exhaust holes 31e arranged in the X direction from above.

Heat insulating plate 130 has a support portion 131, a support portion 132, and a closing plate 133. Support portion 131 is disposed on the upper surface of a waterproof adhesive 140 (which will be described below). Support portion 132 is disposed on the upper surface of a waterproof adhesive 141 (which will be described below). Closing plate 133 is disposed over support portion 131 and support portion 132.

Power storage device 100 includes waterproof adhesives 140, 141 and a waterproof sheet 150. Each of waterproof adhesive 140 and waterproof adhesive 141 is disposed on the upper surface of bottom plate 31m and extends in the X direction. Waterproof adhesive 140 and waterproof adhesive 141 are spaced apart from each other in the Y direction. Smoke exhaust hole 31e is disposed between waterproof adhesive 140 and waterproof adhesive 141 in plan view.

Waterproof adhesives 140, 141 and heat insulating plate 130 close smoke exhaust holes 31e on the upper surface side of protrusion 31l. Waterproof adhesives 140, 141 and heat insulating plate 130 extend in the X direction and close smoke exhaust holes 31e arranged in the X direction.

Waterproof sheet 150 is disposed on the lower surface of protrusion 311 and closes smoke exhaust holes 31e. Waterproof sheet 150 extends in the X direction and closes smoke exhaust holes 31e arranged in the X direction.

Power storage device 100 includes a heat-resistant plate 160. Heat-resistant plate 160 is provided on the portion of share panel 33 which faces safety valve SV. Heat-resistant plate 160 is formed of mica or the like. Heat-resistant plate 160 extends in the X direction. Heat-resistant plate 160 is located below smoke exhaust holes 31e arranged in the X direction.

Fig. 17 is a partially enlarged view of blast collection portion 80 and its vicinity. As shown in Fig. 17, right side portion 74 of inner path defining portion 70 includes an elastic portion 74a and an adhesive layer 74b. Elastic portion 74a is formed of a material that elastically deforms, such as silicon. Elastic portion 74a is in contact with the lower surface of cooler 20 (flow portion 24A in Fig. 17). Adhesive layer 74b bonds elastic portion 74a to the upper surface of share panel 33.

Thus, since elastic portion 74a is not bonded to cooler 20, a blast from power storage cell 10 may pass through between elastic portion 74a and cooler 20. The blast that has passed through between elastic portion 74a and cooler 20 is collected by blast collection portion 80.

The contact position of right side portion 74 is not limited to the lower surface of cooler 20. For example, when cooler 20 is not provided, inner path defining portion 70 may be in contact with the lower surface of bottom plate 31c of lower case 31.

Side bracket 64 is disposed over bottom plate 31c and peripheral wall 31d. Side bracket 64 is fixed to bottom plate 31c and peripheral wall 31d with a bolt (not shown), by welding, or by any other means.

Blast collection portion 80 is disposed in smoke exhaust passage 110. Blast collection portion 80 includes a fixed portion 82, an inclined portion 83, and a protrusion 84. Fixed portion 82 is disposed between share panel 33 and side bracket 64 and is fixed with bolt 81.

Fixed portion 82 is disposed between share panel 33 and side bracket 64. Fixed portion 82 is bonded to side bracket 64 with an adhesive 85. Fixing portion 82 extends from between share panel 33 and side bracket 64 toward inner path defining portion 70.

Inclined portion 83 is provided at the tip of fixed portion 82, and protrusion 84 extends in the up-down direction toward the center of right side portion 74.

As a result, a collection space S3 is formed between blast collection portion 80 and lower case 31. In other words, a blast that has passed through between elastic portion 74a and cooler 20 is collected in collection space S3. On the other hand, a filling portion 86 is charged between blast collection portion 80 and share panel 33. Filling portion 86 is, for example, resin.

Although side bracket 64, right side portion 74, and the like have been described, front bracket 61 (front side portion 71), rear bracket 62 (rear side portion 72), and side bracket 63 (left side portion 73) are also formed similarly.

In power storage device 100 described above, share panel 33 has standing wall 33d standing upward from the portion of panel body 33a which is located around exhaust port 33b. Cover member 40 includes peripheral wall portion 41 that surrounds standing wall 33d and covering portion 42 that covers exhaust port 33b from above. This allows a double shielding structure (labyrinth structure) of standing wall 33d and peripheral wall portion 41 to be provided between a blast and exhaust port 33b. In addition, covering portion 42 can shield a blast from above from exhaust port 33b. As a result, scattering of the blast can be blocked by any one of standing wall 33d, peripheral wall portion 41, and covering portion 42 before the blast is discharged from exhaust port 33b.

In addition, shielding portion 51 (side surface portion 51c) is provided between standing wall 33d and peripheral wall portion 41. As a result, a triple shielding wall is provided by standing wall 33d, peripheral wall portion 41, and shielding portion 51 (side surface portion 51c). As a result, scattering of a blast can be blocked more reliably.

### [Modifications]

The above embodiment has illustrated the example in which standing wall 33d is formed integrally with share panel 33 (panel body 33a), but the present disclosure is not limited thereto. Standing wall 33d may be provided separately from share panel 33 (panel body 33a).

The above embodiment has illustrated the example in which shielding member 50 is provided separately from share panel 33 (panel body 33a), but the present disclosure is not limited thereto. Shielding member 50 may be integrally formed with share panel 33 (panel body 33a).

The above embodiment has illustrated the example in which lower surface portion 51b of shielding portion 51 projects from opening 44 of cover member 40, but the present disclosure is not limited thereto. Lower surface portion 51b may not project from opening 44.

The above embodiment has illustrated the example in which shielding portion 51 of shielding member 50 has upper surface portion 51a, but the present disclosure is not limited thereto. Upper surface portion 51a may not be provided in shielding portion 51. **In** addition, upper surface portion 51a may be provided in only some of shielding portions 51 (for example, shielding portion 51 on the smoke exhaust space S1 side). The same may also apply to lower surface portion 51b.

The above embodiment has illustrated the example in which standing wall 33d surrounds exhaust port 33b, but the present disclosure is not limited thereto. For example, the standing wall may be provided only on the smoke exhaust space S1 side relative to exhaust port 33b.

The above embodiment has illustrated the example in which smoke exhaust space S1 is sealed by fastening of blast collection portion 80 to bracket unit 60 with bolt 81, but the present disclosure is not limited thereto. For example, a seal member (for example, an O-ring formed of silicon rubber or the like) may be disposed along the outer peripheral edge of smoke exhaust space S1.

The above embodiment has illustrated the case in which peripheral wall portion 41 of cover member 40 surrounds (encloses) standing wall 33d, but the present disclosure is not limited thereto. For example, a wall portion (a wall portion of the cover member) corresponding to peripheral wall portion 41 may be positioned so as to face only standing wall 33d on the smoke exhaust space S1 side. Similarly, shielding portion 51 may be positioned so as to face only standing wall 33d on the smoke exhaust space S1 side.

The above embodiment has illustrated the example in which opening 33e of standing wall 33d is shaped into a slit extending in the up-down direction, but the present disclosure is not limited thereto. The opening of standing wall 33d may be, for example, a through hole extending in the thickness direction of the standing wall.

The above embodiment has illustrated the example in which shielding portions 51 are connected to each other by connection portions 52, but the present disclosure is not limited thereto. For example, shielding portions 51 may be provided separately from each other.

The above embodiment has illustrated the example in which shielding member 50 is provided, but the present disclosure is not limited thereto. Shielding member 50 may not be provided.

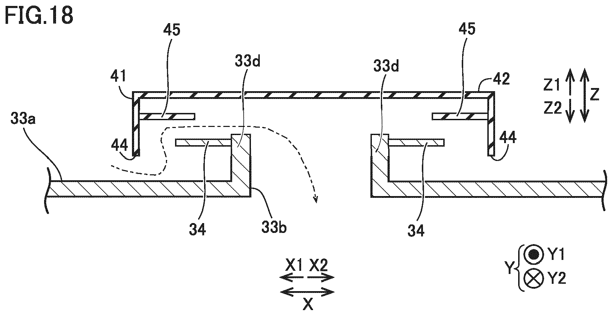

For example, as shown in Fig. 18, a horizontal plate 34 may be provided that projects from standing wall 33d to the side opposite to exhaust port 33b. In addition, a horizontal plate 45 may be provided that projects from peripheral wall portion 41 toward exhaust port 33b. As viewed from the Z I side, horizontal plate 34 and horizontal plate 45 may overlap each other. Each of horizontal plate 34 and horizontal plate 45 may have an annular shape surrounding exhaust port 33b. Consequently, a blast can be shielded by horizontal plate 34 and horizontal plate 45, thus suppressing discharge of the blast from exhaust port 33b. In Fig. 18, an example of the gas flow path in discharge of gas from exhaust port 33b is indicated by the alternate long and short dash line arrow.

Although the present embodiments of the present disclosure have been described, it should be understood that the present embodiments disclosed herein are illustrative and non-restrictive in every respect. The scope of the present disclosure is defined by the terms of the claims and is intended to include any modifications within the scope and meaning equivalent to the terms of the claims.

## Claims

1. A power storage device (100) comprising:
at least one power storage cell (10) including a lower surface (6) on which a safety valve (SV) is provided;
a housing (30) that accommodates the at least one power storage cell and includes a lower case (31) and a share panel (33); and
a cover member (40) disposed on the share panel, wherein
the lower case includes a bottom portion (31c), the bottom portion covering the at least one power storage cell from below and having a through hole (31e) positioned to overlap the safety valve,
the share panel is disposed below the lower case and forms a smoke exhaust space (S1) between the bottom portion of the lower case and the share panel,
the smoke exhaust space is sealed with a sealing portion (90),
the share panel includes
a panel body (33a) covering the bottom portion of the lower case from below and having an exhaust port (33b), and
a standing wall (33d) standing upward from a portion of the panel body, the portion surrounding the exhaust port, and
the cover member includes
an outer wall portion (41) facing the standing wall opposite to the exhaust port relative to the standing wall, and
a covering portion (42) connected to the outer wall portion and covering the exhaust port from above.

2. The power storage device according to claim 1, wherein the standing wall has an opening (33e).

3. The power storage device according to claim 2, further comprising at least one side wall (51c) disposed between the standing wall and the outer wall portion and facing the opening.

4. The power storage device according to claim 3, wherein an upper portion (51d) of the at least one side wall is connected with a projection (51a) projecting opposite to the opening.

5. The power storage device according to claim 3 or 4, wherein the at least one side wall includes
a first side wall (51c) and a second side wall (51c) that sandwich the exhaust port in between in a first direction, and
a third side wall (51c) and a fourth side wall (51c) that sandwich the exhaust port in between in a second direction intersecting the first direction.

6. The power storage device according to claim 5, wherein each of the first side wall and the second side wall is connected to each of the third side wall and the fourth side wall.

7. The power storage device according to any one of claims 1 to 4, wherein the standing wall surrounds the exhaust port.

8. The power storage device according to claim 7, wherein the outer wall portion surrounds the standing wall.
